# EUROPEAN PATENT APPLICATION

(11) **EP 4 403 282 A1**
(43) Date of publication of application: **24.07.2024**
(21) Application number: 23210056.0
(22) Date of filing: 15.11.2023
(51) Int. Cl.: B22F 10/22, B22F 12/90, B33Y 10/00, B33Y 30/00

(54) **SYSTEM AND METHOD FOR LIQUID METAL JET PRINTING WITH PLASMA ASSISTANCE**

(30) Priority: 07.12.2022 US 202218063030
(71) Applicant: Xerox Corporation, Webster, NY 14580 (US)
(72) Inventor: BULLARD, Daniel, Palo Alto, 94304 (US); MAEDA, Patrick Y., Palo Alto, 94304 (US); JACKSON, Warren, Palo Alto, 94304 (US); BIEGELSEN, David K., Palo Alto, 94304 (US)
(74) Representative: Gill Jennings & Every LLP

(57) **Abstract**

A 3D printing system, comprising:
an ejector configured to receive a build material, wherein the ejector comprises a nozzle, and wherein the ejector is configured to eject a plurality of drops of the build material through the nozzle;
a substrate positioned below the nozzle, wherein the drops fall toward the substrate after being ejected from the nozzle, and wherein the drops form a 3D object on the substrate;
a power source configured to generate an alternating electrical current; and
an electrode configured to generate a plasma in response to receiving the alternating electrical current, wherein the drops, the 3D object, the substrate, or a combination thereof are positioned at least partially within the plasma.

## Description

### Technical Field

The present teachings relate generally to three-dimensional (3D) printing and, more particularly, to liquid metal jet 3D printing with plasma assistance.

### Background

Metal drop-on-demand (DOD) additive manufacturing methods, such as magnetohydrodynamic (MHD) liquid metal jet (LMJ) 3D printing, involve forming structures with molten metal droplets via a complex thermofluidic process that involves re-melting, coalescence, metallurgical bonding/adhesion, cooling, and solidification. This process may experience two potential problems. In one case, the local surface temperature of the previously-deposited material, where the jetted molten drop lands, is too low to undergo re-melting by heat from the molten drop. The second case involves the presence of an oxide layer on the surface of previously-deposited material that inhibits metallurgical bonding with the jetted molten drop. Therefore, what is needed is a system and method for addressing one or both of these problems.

### Summary

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A 3D printing system includes an ejector configured to receive a build material. The ejector includes a nozzle. The ejector is configured to eject a plurality of drops of the build material through the nozzle. The 3D printing system also includes a substrate positioned below the nozzle. The drops fall toward the substrate after being ejected from the nozzle. The drops form a 3D object on the substrate. The 3D printing system also includes a power source configured to generate an alternating electrical current. The 3D printing system also includes an electrode configured to generate a plasma in response to receiving the alternating electrical current. The drops, the 3D object, the substrate, or a combination thereof are positioned at least partially within the plasma.

In another embodiment, the 3D printing system includes an ejector configured to receive a build material. The build material includes a metal. The metal includes copper, brass, titanium, nickel, or a combination thereof. The 3D printing system also includes a heating element positioned at least partially around the ejector. The heating element is configured to heat the build material from a solid state into a liquid or molten state in the ejector. The 3D printing system also includes a coil positioned at least partially around the ejector. The 3D printing system also includes a first power source configured to transmit a plurality of pulses to the coil. The coil causes a drop of the build material to be ejected from a nozzle of the ejector in response to each pulse. The 3D printing system also includes a substrate positioned below the nozzle. The drop falls toward the substrate after being ejected from the nozzle. The drop forms at least a portion of a 3D object on the substrate. The 3D printing system also includes an electrode positioned at least partially between the ejector and the substrate. The 3D printing system also includes a second power source configured to transmit an alternating electrical current to the electrode. The electrode generates a plasma in response to the alternating electrical current. The plasma heats the 3D object locally to increase a temperature of a first portion of the 3D object to be from about 800 °C to about 1800 °C. A second portion of the 3D object has a temperature from about 20 °C to about 250 °C. The first portion is smaller than the second portion. The first portion is above the second portion. The plasma removes an oxide from the first portion of the 3D object.

A method for printing a 3D object using a 3D printing system, is also disclosed. The method includes ejecting a plurality of drops of a build material through a nozzle. The drops fall toward a substrate after being ejected from the nozzle. The drops form the 3D object on the substrate. The method also includes generating a plasma with an electrode. The plasma is positioned at least partially around the drops, the 3D object, the substrate, or a combination thereof.

In another embodiment, the method includes ejecting a plurality of drops of a build material through a nozzle. The drops fall toward a substrate after being ejected from the nozzle. The drops form the 3D object on the substrate. The method also includes generating an alternating electrical current with a power source which causes an electrode to generate a plasma at least partially around the drops, the 3D object, the substrate, or a combination thereof.

### Brief Description of the Drawings

The accompanying drawings, which are incorporated in and constitute a part of this specification, illustrate embodiments of the present teachings and together with the description, serve to explain the principles of the disclosure. In the figures:
Figure 1 depicts a cross-sectional side view of a 3D printing system, according to an embodiment.
Figure 2 depicts a cross-sectional side view of a portion of the 3D printing system with a plasma system including one or more electrode probes, according to an embodiment.
Figure 3 depicts a cross-sectional side view of a portion of the 3D printing system with a plasma system including an electrode ring, according to an embodiment.
Figure 4A depicts a graph showing alternating electric current being provided to the electrode(s), and Figure 4B depicts a schematic view of a portion of the 3D printing system showing the movement of electrons in response to the alternating electric current, according to an embodiment.
Figure 5 depicts a flowchart of a method for printing a 3D object (e.g., using the 3D printing system), according to an embodiment.

### Detailed Description

Reference will now be made in detail to exemplary embodiments of the present teachings, examples of which are illustrated in the accompanying drawings. Wherever possible, the same reference numbers will be used throughout the drawings to refer to the same, similar, or like parts.

The present disclosure includes a metal drop-on-demand (DOD) 3D printing system (also referred to as a 3D printer) that ejects molten metal drops from a nozzle onto a substrate to form a 3D object. The 3D printing system includes a plasma system (also referred to as a plasma-assist system) to allow at least a portion of the 3D printing system to reach temperatures in excess of 800 °C, 1000 °C, 1200 °C, 1400 °C, 1600 °C, or 1800 °C to address problems that inhibit coalescence and/or metallurgical bonding when with printing high-temperature metals. As mentioned above, these problems may include: (1) a low surface temperature of the underlying metal (e.g., the previously-deposited layer) of the 3D object and/or (2) the presence of an oxide layer on the underlying metal (e.g., the previously-deposited layer) of the 3D object.

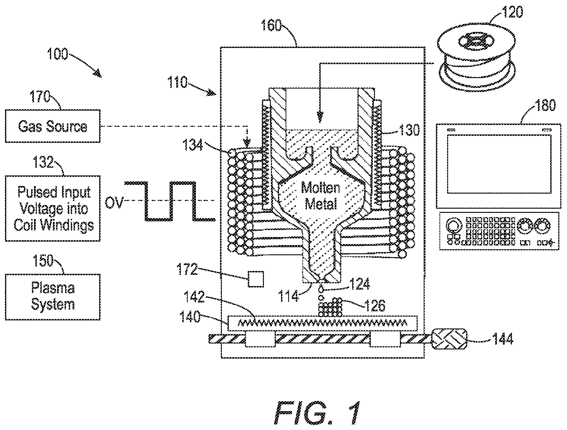

Figure 1 depicts a schematic cross-sectional side view of a 3D printing system 100, according to an embodiment. The 3D printing system 100 may include an ejector (also referred to as a printhead or pump chamber) 110. As used herein, the ejector 110 refers to a structure that can be selectively activated to cause a build material 120 to be ejected from a nozzle 114. As used herein, the nozzle 114 refers to a physical structure from which the build material 120 begins flight.

The build material 120 may be or include a metal, a polymer, or the like. For example, the build material 120 may be or include aluminum, copper, brass, titanium, nickel, or a combination thereof. The build material 120 may have a melting point that is greater than about 600 °C, greater than about 700 °C, greater than about 800°C, greater than about 1000 °C, greater than about 1200 °C, greater than about 1400 °C, or greater than about 1600 °C. For example, the melting point of aluminum is about 660 °C, the melting point of copper is about 1085 °C, the melting point of brass is about 900 °C, the melting point of titanium is about 1670 °C, and the melting point of nickel is about 1453 °C.

The 3D printing system 100 may also include one or more heating elements 130. The heating elements 130 are configured to melt the build material 120 within the inner volume of the ejector 110, thereby converting the build material 120 from a solid state to a liquid and/or molten state within the inner volume of the ejector 110.

The 3D printing system 100 may also include a power source 132 and one or more metallic coils 134. The metallic coils 134 are wrapped at least partially around the ejector 110 and/or the heating elements 130. The power source 132 may be coupled to the coils 134 and configured to provide power thereto. In one embodiment, the power source 132 may be configured to provide a step function direct current (DC) voltage profile (e.g., voltage pulses) to the coils 134, which may create an increasing magnetic field. The increasing magnetic field may cause an electromotive force within the ejector 110, that in turn causes an induced electrical current in the building material 120. The magnetic field and the induced electrical current in the build material 120 may create a radially inward force on the build material 120, known as a Lorentz force. The Lorentz force creates a pressure at an inlet of the nozzle 114 of the ejector 110. The pressure causes the build material 120 to be jetted through the nozzle 114 in the form of one or more drops 124.

The 3D printing system 100 may also include a substrate (also referred to as a build plate) 140 that is positioned below the nozzle 114. The substrate 140 may include a heater 142 therein that is configured to increase the temperate of the substrate 140. In another embodiment, the heater 142 may be omitted or not used during printing. The substrate 140 may also include a substrate control motor 144 that is configured to move the substrate 140 as the drops 124 are being jetted (i.e., during the printing process).

The drops 124 that are ejected from the nozzle 114 may land on the substrate 140 and produce at least a portion of a 3D object 126. For example, the drops 124 may land on the substrate 140 and cool and solidify to produce a (e.g., first) layer of the 3D object 126. Once the first layer has cooled and/or solidified, the nozzle 114 may then eject additional drops 124 onto the first layer to form another (e.g., second) layer. The additional drops 124 may re-melt, coalesce, and/or bond/adhere with the first layer. The additional drops 124 may then cool and/or solidify to form the second layer on the first layer. This process may be repeated to print/build the 3D object 126. In one embodiment, the 3D printing system 100 and/or the drops 124 may not be used for welding (e.g., tungsten inert gas welding).

The 3D printing system 100 may also include a plasma system 150. As described in greater detail below, the plasma system 150 may generate a plasma around the nozzle 114, the drops 124, the 3D object 126, the substrate 140, or a combination thereof. Additional details of the plasma system 150 are provided below. Instead of or in addition to the plasma system 150, the 3D printing system 100 may also or instead include one or more lasers, induction joule heating coils, e-beams, heat enclosures, or a combination thereof.

In one embodiment, the 3D printing system 100 may also include an enclosure 160. The enclosure 160 may be positioned at least partially around the ejector 110, the nozzle 114, the drops 124, the 3D object 126, the heating elements 130, the coils 134, the substrate 140, the plasma system 150, or a combination thereof. In one embodiment, the enclosure 160 may be hermetically sealed to provide a vacuum environment to prevent an oxide layer from forming on the 3D object 126 during printing. In another embodiment, the enclosure 160 may not be hermetically sealed because the plasma system 150 may help to remove (e.g., ablate) the oxide layer on the 3D object 126. In yet another embodiment, the enclosure 160 may be omitted.

In one embodiment, the 3D printing system 100 may also include one or more gas sources (one is shown: 170). The gas source 170 may be positioned outside of the enclosure 160 and configured to introduce gas into the enclosure 160. The gas source 170 may be configured to introduce a gas that flows (e.g., downward) around the ejector 110, the nozzle 114, the drops 124, the 3D object 126, the substrate 140, or a combination thereof. The gas may not be introduced into the ejector 110. The gas may be or include an inert gas (e.g., argon), nitrogen, or a combination thereof. The gas may help to prevent the oxide layer from forming on the 3D part 126 during printing. In another embodiment, the gas source 170 may be omitted or turned off because the plasma system 150 may help to remove (e.g., ablate) the oxide layer on the 3D object 126.

The 3D printing system 100 may also include a gas sensor 172. The gas sensor 172 may be positioned within the enclosure 160. The gas sensor 172 may also or instead be positioned proximate to (e.g., within 5 cm or less from) the drops 124, the 3D object 126, and/or the substrate 140 (e.g., in an embodiment where the enclosure 160 is omitted). The gas sensor 172 may be configured to measure a concentration of the gas introduced by the gas source 170, a concentration of oxygen, or a combination thereof.

The 3D printing system 100 may also include a computing system 180. The computing system 180 may be configured to control the introduction of the build material 120 into the ejector 110, the heating elements 130, the power source 132, the substrate control motor 144, the plasma system 150, the gas source 170, the gas sensor 172, or a combination thereof. For example, the computing system 180 may be configured to modify a waveform of an alternating electrical current that is used by the plasma system 150.

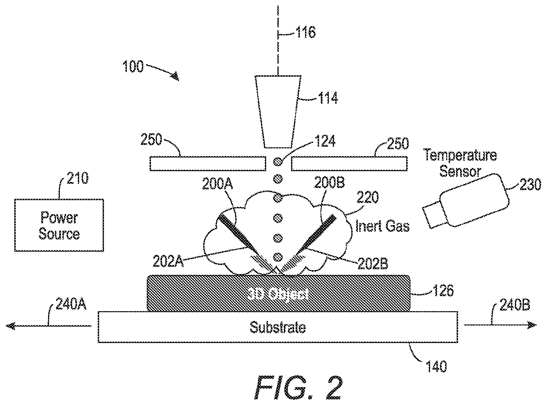

Figure 2 depicts a cross-sectional side view of a portion of the 3D printing system 100 showing the plasma system 150 including one or more electrode probes (two are shown: 200A, 200B), according to an embodiment. In one example, the electrode probes 200A, 200B may be or include tungsten electrode probes. The electrode probes 200A, 200B may each include a lower (e.g., discharge) end 202A, 202B that is positioned (e.g., vertically) between the nozzle 114 and the substrate 140 and/or (e.g., vertically) between the nozzle 114 and the 3D object 126.

The plasma system 150 may also include a power source 210. The power source 210 may be configured to provide an alternating electrical current (e.g., AC power) to the electrode probes 200A, 200B, which causes the electrode probes 200A, 200B to generate a plasma 220 at least partially around the nozzle 114, the drops 124, the 3D object 126, the substrate 140, or a combination thereof.

Conventional liquid metal jet printing involves heating the 3D object 126 globally to provide adhesion with the next drop(s) 124 falling thereon. For example, while liquid metal jet printing with an aluminum build material and no plasma system, the global temperature of the 3D object 126 may be maintained (e.g., via heating) between about 300 °C and 450 °C. As used herein, "globally" refers to a majority of the 3D object 126 (e.g., more than 50% of the volume). However, global heating of the 3D object 126 may lead to internal stress and/or distortion of the 3D object 126.

The plasma system 150 (e.g., the plasma 220) may heat the drops 124, the 3D object 126, the substrate 140, or a combination thereof. In one embodiment, the plasma system 150 (e.g., the plasma 220) may heat the 3D object 126 locally to provide adhesion with the next drop(s) 124 falling thereon, while heating the 3D object 126 globally as little as possible. For example, plasma system 150 (e.g., the plasma 220) may heat the previously-deposited (e.g., top) layer(s) of the 3D object 126 where the next drop(s) 124 will land. This may provide adhesion while minimizing internal stress and/or distortion of the 3D object 126. As used herein, "locally" refers to a minority of the 3D object 126 (e.g., less than 50% of the volume).

In one embodiment, the plasma system 150 (e.g., the plasma 220) may heat the 3D object 126 locally to a temperature from about 800 °C to about 1000 °C, about 1000 °C to about 1200 °C, about 1200 °C to about 1400 °C, about 1400 °C to about 1600 °C, or about 1600 °C to about 1800 °C. The temperature to which the 3D object 126 is heated locally may be varied based upon the type of metal being printed and/or the melting point thereof. However, a temperature of a remainder of the 3D object 126 (e.g., a lower portion of the 3D object 126) may be maintained between about 20 °C and about 50 °C, about 50 °C and about 100 °C, or about 100 °C and about 250 °C. As used herein, "remainder" refers to a majority of the 3D object 126 (e.g., more than 50% of the volume) that will not have the next drop(s) 124 land thereon.

In addition, the plasma 220 may remove (e.g., ablate) at least a portion of an oxide layer from the previously-deposited (e.g., top) layer of the 3D object 126 before the drops 124 land thereon. Increasing the temperature and/or removing the oxide layer may promote coalescence and/or metallurgical adhesion/bonding between the (e.g., metallic) drops 124 and the previously-deposited (e.g., top) layer of the 3D object 126.

The plasma system 150 may also include one or more sensors (one is shown: 230). The sensor(s) 230 may be configured to measure the temperature of the nozzle 114, the drops 124, the 3D object 126, the substrate 140, the plasma 220, or a combination thereof. For example, the sensor(s) 230 may be configured to measure a first (e.g., local) temperature of the previously-deposited (e.g., top) layer of the 3D object 126 where the next drop(s) 124 will land, and a second (e.g., global) temperature of the remainder of the 3D object 126 (e.g., below the top layer). The sensor(s) 230 may be or include a pyrometer, a thermocouple, a camera, or the like.

The sensor(s) 230 may also or instead be configured to measure an amount/level of oxide on the previously-deposited (e.g., top) layer of the 3D object 126. The sensor(s) 230 may also or instead measure/provide a chemical analysis of the drops 124, the 3D object 126, the plasma 220, or a combination thereof. For example, the sensor(s) 230 may be or include a glow discharge optical emission spectroscope (GDOES). The high electron energy of the plasma can be used to produce emissions characteristics of elements.

The properties measured by the sensor(s) 230 may be transmitted to the computing system 180 (Figure 1). As described above, the computing system 180 may be configured to modify a waveform of the alternating electrical current generated by the power source 210 based at least partially upon the measured properties. For example, the computing system 180 may modify the amplitude, frequency, wavelength, wave shape, and/or pulse rate of the alternating electrical current provided to the electrode probes 200A, 200B based at least partially upon the measured properties. The waveform may also be determined apriori, in whole or in-part, based on multi-physics modeling of the build part mechanical design, knowledge of the printing process, pre-determined build path, and the build material involved.

The computing system 180 may also or instead modify the waveform if the OES type emission shows that there is a predetermined amount/level of oxide present. In this example, the waveform may be dynamically modified to be more electrode negative, or vice versa. The computing system 180 may also or instead modify the waveform based upon the spatial location on the 3D object 126. In this example, the waveform may be dynamically modified to be more electrode positive at/near the previously-deposited (e.g., top) layer of the 3D object 126 to inject more heat into the 3D object 126 to delay the cooling rate, which may alter the microstructure of the 3D object 126.

As shown, the first electrode probe 200A may be positioned on a first side of the nozzle 114, and the second electrode probe 200B may be positioned on a second, opposing side of the nozzle 114. More particularly, the nozzle 114 may have a central longitudinal axis 116 extending therethrough. The lower end 202A of the first electrode probe 200A may be positioned on a first side of the axis 116, and the lower end 202B of the second electrode probe 200B may be positioned on the second side of the axis 116. A (e.g., horizontal) distance between the lower ends 202A, 202B of the electrical probes 200A, 200B and the axis 116 may be from about 1 mm to about 1 cm, about 1 cm to about 3 cm, about 3 cm to about 5 cm, or more. A (e.g., vertical) distance between the lower ends 202A, 202B of the electrical probes 200A, 200B and the substrate 140 and/or the previously-deposited (e.g., top) layer of the 3D object 126 may be from about 1 mm to about 1 cm, about 1 cm to about 3 cm, about 3 cm to about 5 cm, or more. Thus, the electrical probes 200A, 200B may move (e.g., upward) as the 3D object 126 is printed/built.

In one embodiment, the electrical probe(s) 200A, 200B may be on (i.e., receiving the alternating electrical current and producing the plasma 220) continuously during printing. In another embodiment, the alternating electrical current may be provided to the electrical probe(s) 200A, 200B in discrete pulses. For example, the pulses may be timed based at least partially upon (e.g., between) drop ejections and/or drop landings. In another embodiment, the first electrode probe 200A may be on, and the second electrode probe 200B may be off (i.e., not receiving the alternating electrical current and not producing the plasma 220) when the substrate 140 is moving in a first direction 240A that is toward the first electrical probe 200A. Similarly, the second electrode probe 200B may be on, and the first electrode probe 200A may be off when the substrate 140 is moving in a second, opposing direction 240B that is toward the second electrical probe 200B. This may provide heating and/or remove the oxide layer in the location where the next drops 124 are about to land. In yet another embodiment, alternating the plasmas may be used to modify the cooling rates of the 3D object 126, which may modify the microstructure of the 3D part 126. The cooling rate may be increased at the surfaces (e.g., to make them harder and/or more wear-resistant), or slowed in the remainder of the 3D part 126 to make it tougher.

The system 100 may also include a heat shield 250. The heat shield 250 may be positioned (e.g., vertically) between the nozzle 114 and the substrate 140 and/or 3D object 126. In the example shown, the heat shield 250 may be above the electrode probes 200A, 200B. The heat shield 250 may include an opening through which the drops 124 may fall. The heat shield 250 may insulate the ejector 110 and/or the coils 134 from the heat coming off the substrate 140 as well as from any splatter of molten build material. The heat shield 250 may have a highly reflective upper and/or lower surface to reflect/shield heat.

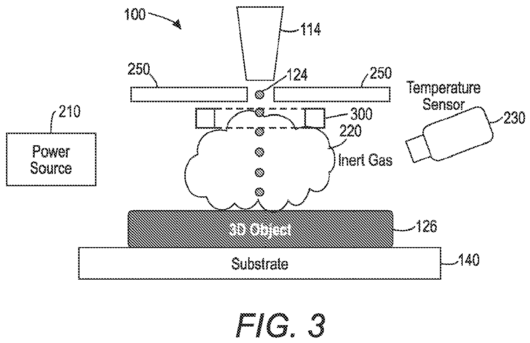

Figure 3 depicts a cross-sectional side view of a portion of the 3D printing system 100 showing the plasma system 150 including an electrode ring 300, according to an embodiment. The electrode ring 300 may be used instead of, or in addition to, the electrode probes 200A, 200B. The electrode ring 300 may be positioned (e.g., vertically) between the nozzle 114 and the substrate 140 and/or (e.g., vertically) between the nozzle 114 and the 3D object 126. The electrode ring 300 may also or instead be positioned at least partially around the nozzle 114, the axis 116, the drops 124, the 3D part 126, or a combination thereof.

The power source 210 may be configured to provide the alternating electrical current to the electrode ring 300, which causes the electrode ring 300 to generate the plasma 220 at least partially around the nozzle 114, the drops 124, the 3D object 126, the substrate 140, or a combination thereof. In one embodiment, the entire electrode ring 300 (e.g., 360 degrees around) may be on at the same time. In another embodiment, a first circumferential portion (e.g., 180 degrees) of the electrode ring 300 may be on while another second circumferential portion (e.g., the other180 degrees) is off. For example, the first circumferential portion may be on, and the second circumferential portion may be off when the substrate 140 is moving in the first direction 240A that is toward the first circumferential portion. Similarly, the second circumferential portion may be on, and the first circumferential portion may be off when the substrate 140 is moving in the second, opposing direction 240B that is toward the second circumferential portion.

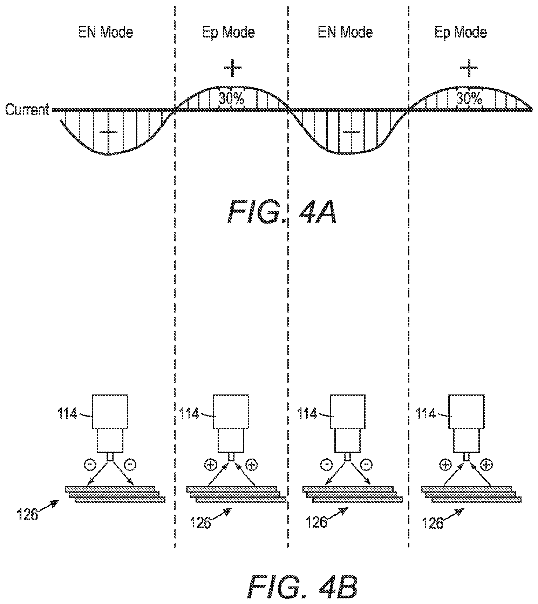

Figure 4A depicts a graph 400 showing the alternating electrical current from the power source 210 that is provided to the electrode(s) 200A, 200B, 300, and Figure 4B depicts a schematic view of a portion of the 3D printing system 100 showing the movement of electrons in response to the alternating electrical current, according to an embodiment. The plasma system 150 (e.g., the power source 210) may operate in an electron positive (EP) mode and/or an electron negative (EN) mode. In the EP mode, a plurality of ions (e.g., argon ions) may contact the previously-deposited (e.g., top) layer of the 3D object 126 to remove (e.g., ablate) the oxide layer thereon. In the EN mode, the previously-deposited (e.g., top) layer of the 3D object 126 may be heated (e.g., to be from about 800 °C to about 1800 °C).

As mentioned above, the waveform (e.g., amplitude, frequency, wavelength, wave shape, and/or pulse rate) from the power source 210 may be modified based at least partially upon the properties measured by the sensor(s) 230. The modification of the waveform may improve the removal of the oxide layer during the EP mode and/or improve the heating during the EN mode. In one embodiment, the waveform may be unbalanced. For example, the positive portion of the waveform (e.g., during the EP mode) may be larger or smaller than the negative portion of the waveform (e.g., during the EN mode). The frequency of the (e.g., sine) waveform may be higher than is used in welding (e.g., 60 Hz), especially if paired with the frequency of the drops 124. For example, the frequency of the waveform may be from about 70 Hz to about 100 Hz, about 100 Hz to about 150 Hz, about 150 Hz to about 300 Hz, or more.

As shown in Figure 4, the waveform from the power source 210 to the electrode(s) 200A, 200B, 300 may be a curved AC waveform (e.g., similar to a sine or cosine waveform). This may be in contrast to the DC waveform from the power source 132 to the coils 134, which may be a non-curved (e.g., square or rectangle) waveform.

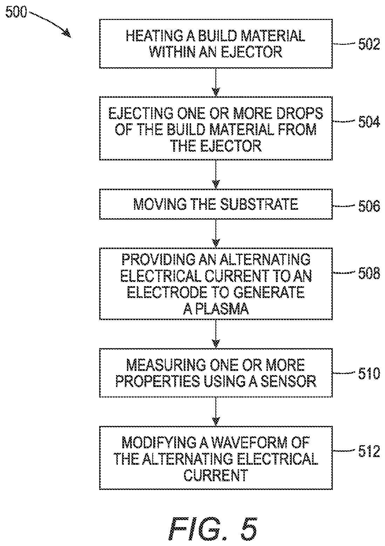

Figure 5 depicts a flowchart of a method 500 for operating the 3D printer 100 to print the 3D object 126, according to an embodiment. As mentioned above, the method 500 may not be used for welding (e.g., to weld two existing components together). An illustrative order of the method 500 is provided below; however, one or more steps of the method 500 may be performed simultaneously, in a different order, combined, repeated, or omitted.

The method 500 may include heating the build material 120 within the ejector 110, as at 502. The build material 120 may be heated using the heating elements 130. The build material 120 may be heated to convert the build material 120 from a solid state into a liquid and/or molten state.

The method 500 may also include ejecting one or more drops 124 of the build material 124, as at 504. This may include generating one or more pulses with the power source 132. The pulses may be transmitted to the coils 134 around the ejector 110. One drop 124 may be ejected from the nozzle 114 in response to each ejection pulse.

The method 500 may also include moving the substrate 140, as at 506. The substrate 140 may be moved in one two, or three dimensions. The substrate 140 may be moved continuously or in discrete movements. The substrate 140 may be moved in response to the pulses, the ejection of the drops 124 from the nozzle 114, the completion of a layer of the 3D object 126, or a combination thereof. The movement of the substrate 140 may determine the size and/or shape of the 3D object 126.

The method 500 may also include providing an alternating electrical current from the power source 210 to the electrode(s) 200A, 200B, 300, as at 508. This may cause the electrode(s) 200A, 200B, 300 to generate the plasma 220 at least partially around the nozzle 114, the drops 124, the 3D object 126, the substrate 140, or a combination thereof. As mentioned above, the plasma 220 may heat the 3D object 126 locally, rather than globally. The plasma 220 may also or instead remove (e.g., ablate) at least a portion of an oxide layer from the previously-deposited (e.g., top) layer of the 3D object 126 before the drops 124 land thereon.

The method 500 may also include measuring one or more properties using the sensor 230, as at 510. The properties may be or include the temperature of the drops 124, the previously-deposited (e.g., top) layer of the 3D object 126, the remainder of the 3D object 126, the substrate 140, the plasma 220, or a combination thereof. The properties may also or instead be the amount/level of the oxide on the 3D object 126.

The method 500 may also include modifying a waveform of the alternating electrical current, as at 512. The waveform may be modified at least partially on response to the measured properties. The waveform may be modified to modify the heating (e.g., during the EN mode) and/or to modify the removal of the oxide (e.g., during the EP mode).

Notwithstanding that the numerical ranges and parameters setting forth the broad scope of the present teachings are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than 10" may include any and all sub-ranges between (and including) the minimum value of zero and the maximum value of 10, that is, any and all sub-ranges having a minimum value of equal to or greater than zero and a maximum value of equal to or less than 10, e.g., 1 to 5.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

## Claims

1. A 3D printing system, comprising:
an ejector configured to receive a build material, wherein the ejector comprises a nozzle, and wherein the ejector is configured to eject a plurality of drops of the build material through the nozzle;
a substrate positioned below the nozzle, wherein the drops fall toward the substrate after being ejected from the nozzle, and wherein the drops form a 3D object on the substrate;
a power source configured to generate an alternating electrical current; and
an electrode configured to generate a plasma in response to receiving the alternating electrical current, wherein the drops, the 3D object, the substrate, or a combination thereof are positioned at least partially within the plasma.

2. The 3D printing system of claim 1, wherein one of: the build material comprises a metal having a melting point greater than or equal to about 700 °C; the build metal comprises copper, brass, titanium, nickel, or a combination thereof; and wherein the plasma heats the 3D object locally to increase a temperature of a first portion of the 3D object to be from about 800 °C to about 1800 °C.

3. The 3D printing system of claim 1, wherein the plasma heats the 3D object locally to increase a temperature of a first portion of the 3D object to be from about 800 °C to about 1800 °C and wherein a second portion of the 3D object has a temperature from about 20 °C to about 250 °C.

4. The 3D printing system of claim 1, wherein the plasma removes an oxide from the 3D object; or
the 3D printing system does not comprise an enclosure around the ejector and the substrate; or
the ejector, the substrate, the drops, and the 3D object are not in a vacuum environment when the drops are ejected from the nozzle; or
the substrate does not introduce heat into the 3D part when the drops are ejected from the nozzle; or
neither an inert gas nor a nitrogen gas are introduced around the nozzle, the drops, the 3D object, or a combination thereof when the drops are ejected from the nozzle.

5. A 3D printing system, comprising:
an ejector configured to receive a build material, wherein the build material comprises a metal, wherein the metal comprises copper, brass, titanium, nickel, or a combination thereof;
a heating element positioned at least partially around the ejector, wherein the heating element is configured to heat the build material from a solid state into a liquid or molten state in the ejector;
a coil positioned at least partially around the ejector;
a first power source configured to transmit a plurality of pulses to the coil, wherein the coil causes a drop of the build material to be ejected from a nozzle of the ejector in response to each pulse;
a substrate positioned below the nozzle, wherein the drop falls toward the substrate after being ejected from the nozzle, and wherein the drop forms at least a portion of a 3D object on the substrate;
an electrode positioned at least partially between the ejector and the substrate; and
a second power source configured to transmit an alternating electrical current to the electrode, wherein the electrode generates a plasma in response to the alternating electrical current, wherein the plasma heats the 3D object locally to increase a temperature of a first portion of the 3D object to be from about 800 °C to about 1800 °C, wherein a second portion of the 3D object has a temperature from about 20 °C to about 250 °C, wherein the first portion is smaller than the second portion, wherein the first portion is above the second portion, and wherein the plasma removes an oxide from the first portion of the 3D object.

6. The 3D printing system of claim 5, wherein the electrode comprises:
a first electrode probe positioned on a first side of the nozzle; and
a second electrode probe positioned on a second, opposing side of the nozzle,
wherein the alternating electrical current is transmitted to the first electrode probe and not the second electrode probe when the substrate is moving in a first direction toward the first electrode probe, and wherein the alternating electrical current is transmitted to the second electrode probe and not the first electrode probe when the substrate is moving in a second, opposing direction toward the second electrode probe.

7. The 3D printing system of claim 5, wherein the electrode comprises an electrode ring, wherein the nozzle has a central longitudinal axis extending therethrough, and wherein the electrode ring is positioned around the central longitudinal axis and vertically between the nozzle and the 3D object; or
the system further comprising a sensor configured to measure the temperature, a level of the oxide, or both, wherein the second power source is configured to modify a waveform of the alternating electrical current in response to the measurement; or
the drop is not used for welding.

8. A method for printing a 3D object using a 3D printing system, the method comprising:
ejecting a plurality of drops of a build material through a nozzle, wherein the drops fall toward a substrate after being ejected from the nozzle, and wherein the drops form the 3D object on the substrate; and
generating a plasma with an electrode, wherein the plasma is positioned at least partially around the drops, the 3D object, the substrate, or a combination thereof.

9. The method of claim 8, further comprising generating an alternating electrical current with a power source, wherein the alternating electrical current is provided to the electrode, which causes the electrode to generate the plasma; or
wherein the electrode comprises: a first electrode probe positioned on a first side of the nozzle; and a second electrode probe positioned on a second, opposing side of the nozzle, wherein the plasma is generated using the first electrode probe and not the second electrode probe when the substrate is moving in a first direction toward the first electrode probe, and wherein the plasma is generated using the second electrode probe and not the first electrode probe when the substrate is moving in a second, opposing direction toward the second electrode probe..

10. The method of claim 8, further comprising generating an alternating electrical current with a power source, wherein the alternating electrical current is provided to the electrode, which causes the electrode to generate the plasma; and further comprising:
measuring a parameter with a sensor, wherein the parameter comprises a temperature of the 3D object, a level of an oxide on the 3D object, or both; and
modifying a waveform of the alternating electrical current in response to the measured parameter.

11. The method of claim 10, wherein modifying the waveform comprises modifying an amplitude, a frequency, and/or a wavelength of the waveform to increase an electron positive (EP) mode of the waveform to increase a removal of the oxide, or to increase an electron negative (EN) mode of the waveform to increase the temperature of the 3D object.

12. A method for printing a 3D object using a 3D printing system, the method comprising:
ejecting a plurality of drops of a build material through a nozzle, wherein the drops fall toward a substrate after being ejected from the nozzle, and wherein the drops form the 3D object on the substrate; and
generating an alternating electrical current with a power source which causes an electrode to generate a plasma at least partially around the drops, the 3D object, the substrate, or a combination thereof.

13. The method of claim 12, wherein the build material comprises a metal having a melting point greater than or equal to about 700 °C; or
the build material comprises copper, brass, titanium, nickel, or a combination thereof; or
the plasma causes a plurality of argon ions contact a surface of the 3D object and remove an oxide layer thereon when the alternating electrical current is in an electron positive mode; or
a frequency of the alternating electrical current is from about 70 Hz to about 300 Hz.

14. The method of claim 12, wherein the plasma causes a plurality of argon ions contact a surface of the 3D object and remove an oxide layer thereon when the alternating electrical current is in an electron positive mode and wherein a first portion of the 3D object is locally heated with the plasma when the alternating electrical current is in an electron negative mode.

15. The method of claim 14, wherein a number of the argon ions contacting the surface of the 3D object is reduced in the electron negative mode, and wherein the local heating of the first portion of the 3D object is reduced in the electron positive mode; or
the first portion comprises a top surface that is configured to receive a next drop of the build material; or
the first portion comprises less than 50% of the 3D object; or
a second portion of the 3D object has a temperature from about 20 °C to about 250 °C, and wherein the second portion comprises greater than 50% of the 3D object.
